# EUROPEAN PATENT SPECIFICATION

(11) **EP 0 887 964 B1**
(45) Date of publication and mention of the grant of the patent: **07.06.2006**
(21) Application number: 98301850.8
(22) Date of filing: 12.03.1998
(51) Int. Cl.: G02B 6/293

(54) **Filter selector**
Filterwähler
Sélecteur de filtres

(30) Priority: 26.06.1997 GB 9713575
(43) Date of publication of application: 30.12.1998
(73) Proprietor: Marconi UK Intellectual Property Ltd, Coventry, CV3 1HJ (GB)
(72) Inventor: Ferguson, Stephen Patrick, Earlside, Coventry CV5 6PD (GB); Thorley, Anthony Michael, Linlithgow, West Lothian EH48 6JE (GB)
(74) Representative: Collier, Ian Terry

(56) References cited:
- JP-A- 9 083 495
- PATENT ABSTRACTS OF JAPAN vol. 1997, no. 06, 30 June 1997 (1997-06-30) & JP 09 033750 A (NIPPON TELEGR & TELEPH CORP), 7 February 1997 (1997-02-07)

## Description

In optical telecommunications transmission, there is a growing use of wavelength division multiplexing (WDM). In current WDM systems, different wavelengths of invisible light are each modulated in some way, and combined by multiplexing onto the same optical fibre. The modulation of each wavelength may be analogue or digital, with various rates and protocols, or combinations of them, in order to carry telecommunications traffic such as data, video and voice. At a receiving equipment, conventionally the different wavelengths are separated and demodulated individually.

It is economically attractive to be able to access just some of the wavelengths passing along a fibre, without incurring the expense and other consequences of demultiplexing them all. Access could involve removing or copying light from the fibre at a given wavelength, and/or adding light at the same, or at another wavelength if there is a gap in the spectrum of light already on the fibre. An equipment which provides this feature is a wavelength add-drop multiplexer (WADM). Typically 16 wavelengths might be carried on one fibre, and access to up to say 4 of them might be needed at one site.

It is especially important to be able to change or reconfigure the selection of wavelengths which are to be accessed by remote control. This is in keeping with the general trend of telecommunications transmission towards "managed bandwidth", by which traffic is increasingly routed around the network as required under central control, via network elements such as SDH (Synchronous Digital Hierarchy) add-drop multiplexers (ADMs) and digital cross-connects.

Various filter technologies exist for WDM multiplexing and demultiplexing, and some are applicable to WDMs. Most of the technologies which allow wavelength access to be configurable have significant performance limitations. This reflects the common fact in systems engineering that an element which is variable in one parameter often performs more marginally in that parameter and also in other parameters, compared with a fixed element.

One way to overcome this problem is to use a set of reflective wavelength filters, each fixed in its wavelength selection, and to introduce different filters into the through path as required. Such filters can achieve high performance in terms of extinguishing the selected wavelength while not affecting others. The introduction of a specific filter would cause its wavelength, when received, to be reflected to one side and thereby dropped to a specified user, and would allow light of the same wavelength to be introduced or added from the side and reflected into the onwards through path.

The potential hazard which arises is that the change from one wavelength filter to another could disturb the total traffic in some way, by temporarily interrupting other wavelengths. Even a disturbance lasting a few nanoseconds or less could cause traffic loss lasting many milliseconds or more, because of the nature of the traffic typically carried. Similarly, a minor but sudden change in the path length of the light, such as by total removal of a filter, could cause disruption. Many telecommunications applications, such as transmission of SDH traffic, cannot tolerate such disruption. The present invention avoids removal of the filter substrate from the path.

One possible way to provide selection between a number of filters is to move each in turn into a light beam, while ensuring by some means that the transition between filters does not disrupt wavelengths for which filters are not being applied. The light beam can be formed by lenses, such that light leaves a fibre, is focussed into a parallel beam of light which passes through space into another lens and is refocussed into another fibre. Suitable commercial devices exist for this purpose, and filters or other components could be introduced into the beam, which may typically be 20mm long.

JP (A) 09033750 discloses a demultiplexing circuit for separating a selected wavelength from wavelength multiplex light. The circuit comprises a filter having a reflection/transmission characteristic which varies with incidence position of the multiplex light. The filter comprises respective filter areas which transmit light of only a single selected wavelength and reflects all other wavelengths, and a filter area which reflects ALL of the wavelengths. The filter area which reflects ALL wavelengths abuts with each of the other filter areas. To change the wavelength to be separated from a first selected wavelength to a second selected wavelength the incidence position is moved, by translating the filter relative to the incident multiplex light, from the respective filter area which reflect light corresponding to the first selected wavelength to the filter area which reflects ALL wavelengths and then to the respective filter area which reflects lights at the second selected wavelength. The filter area which reflects ALL wavelengths minimises the effect on other wavelengths during tuning between selected wavelengths.

According to the present invention there is provided a wavelength selectable filter arrangement for selecting optical radiation of a selected wavelength from a beam of wavelength division multiplexed optical radiation, said arrangement comprising: a planar array of filters, each filter having an optical characteristic that selects a respective wavelength of radiation; the array further comprising a filter region which does not substantially affect all wavelengths of the WDM radiation and which abuts each of the filters; and means for moving the array relative to the beam of radiation within the plane of the array such that the beam is selectably incident upon a selected filter, wherein in operation movement between positions in which the beam is incident upon a filter always occurs via a position in which the beam is incident on the filter region which does not H affect all wavelengths, characterised in that each filter has an optical characteristic that reflects radiation of a respective wavelength and the filter region which does not affect all wavelengths is substantially transparent to all wavelengths of the WDM radiation.

In one arrangement the filters are arranged linearly with at least one edge of each filter abutting with an edge of the transparent filter region. Preferably in such an arrangement the transparent filter region is substantially rectangular in shape with the filters being arranged along and abutting with a longer edge of the rectangular region.

In an alternative arrangement the filters are arranged in a two dimensional array with at least one edge of each filter abutting the transparent filter region. Preferably the transparent filter region is cruciform in shape with the filters being located in and abutting with adjacent arms of the cruciform.

In either a linear or two dimensional arrangement the filters are preferably substanti ally square in shape.

According to a further aspect of the invention there is provided a wavelength add-drop multiplexer (WADM) incorporating a filter arrangement according to first aspect of the invention. Advantageously the WADM incorporates a plurality of filter arrangements that are arranged sequentially along the axis of the beam of radiation thereby enabling a plurality of wavelength to be selected from the beam of radiation.

The present invention will now be described, by way of example, with reference to the accompanying drawings, in which:
Figure 1 shows one possible filter arrangement in accordance with the present invention; and
Figure 2 shows an alternative possible filter arrangement.

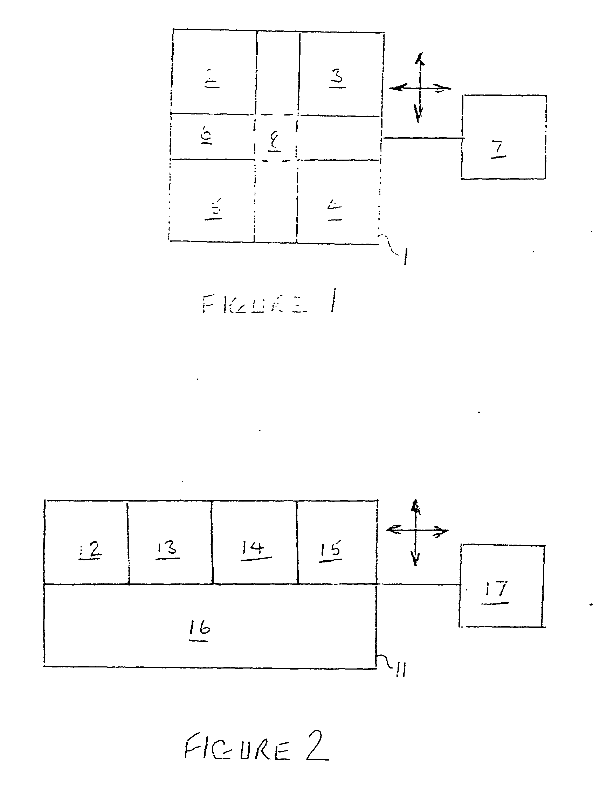

It could be arranged mechanically as shown in Figure 1 by having a cross-shaped glass filter plate 1, with a different filter 2, 3, 4, 5 in each arm of the cross, and a nominal transparency 6 at all other areas of the cross, notably the centre 8. A two-motion actuator 7 could then move each filter arm in turn into the beam controlled so as to always pass through the centre position 8 of the cross. A rotation of the filter plate 1 in its own plane would not be acceptable because it would result in unwanted interruptions to other wavelengths as the plate moved between two selected wavelengths whose filters were not adjacent on the cross.

An alternative method, suitable for selecting between an almost unlimited number of wavelengths, as shown in Figure 2, could be the use of a line of filters 12, 13, 14, 15 along a plate 11 and having a nominally transparent area 16 parallel to the filters 12, 13, 14, 15 which could be moved sideways in its own plane in order to move between clear and filtered areas, and lengthwise in order to select the next filter.

The times associated with the movement of such filters could be well under a second, which would be compatible with the response times of existing remote management systems used for bandwidth management. Where faster response is needed, perhaps for protection switching within scores of milliseconds between two alternative routes, then a simpler mechanism with just two filters could be used.

In order to access multiple wavelengths at the same time, multiple assemblies as described above could be placed sequentially in the light beam. Each would reflect just the selected wavelength, allowing the others to pass through to the next assembly with relatively little loss of light energy.

A key requirement of the mechanical system would be high reliability, irrespective of whether the period between reconfigurations were milliseconds or years. Either could occur in telecommunications applications.

## Claims

1. A wavelength selectable filter arrangement for selecting optical radiation of a selected wavelength from a beam of wavelength division multiplexed optical radiation, said arrangement comprising: a planar array (1,11) of filters, each filter (2-5; 12-15) having an optical characteristic that selects a respective wavelength of radiation; the array further comprising a filter region (6, 8; 16) which does not substantially affect all wavelengths of the WDM radiation and which abuts each of the filters; and means (7; 17) for moving the array relative to the beam of radiation within the plane of the array such that the beam is selectably incident upon a selected filter, wherein in operation movement between positions in which the beam is incident upon a filter always occurs via a position in which the beam is incident on the filter region which does not affect all wavelengths, **characterised in that** each filter (2-5; 12-15) has an optical characteristic that reflects radiation of a respective wavelength and the filter region which does not affect all wavelengths (6, 8;16) is substantially transparent to all wavelengths of the WDM radiation.

2. An arrangement as claimed in Claim 1 in which the filters (12-15) are arranged linearly and in which at least one edge of each filter abuts with an edge of the transparent filter region (16).

3. An arrangement as claimed in Claim 2 in which the transparent filter region (16) is substantially rectangular in shape and in which the filters (12-15) are arranged along and abut with a longer edge of the rectangular region.

4. A arrangement as claimed in Claim 1 in which the filters (2-5) are arranged in a two dimensional array and in which at least one edge of each filter abuts the transparent filter region (6, 8).

5. An arrangement as claimed in Claim 4 in which the transparent filter region (6, 8) is cruciform in shape and in which the filters (2-5) are located in and abutting with adjacent arms of the cruciform.

6. An arrangement as claimed in any preceding claim in which each filter (2-5; 12-15) is substantially square in shape.

7. A wavelength add-drop multiplexer (WADM) incorporating a filter arrangement according to any preceding claim.

8. A WADM according to Claim 7 incorporating a plurality of filter arrangements that are arranged sequentially along the axis of the beam of radiation thereby enabling a plurality of wavelength to be selected from the beam of radiation.

## Patentansprüche

1. Wellenlängen-Auswahlfilter-Anordnung zum Auswählen von einer optischen Strahlung einer ausgewählten Wellenlänge aus einem Strahl von einer optischen Strahlung im Wellenlängen-Multiplex, wobei die Anordnung enthält: eine planare Anordnung (1; 11) von Filtern, wobei jeder Filter (2-5;12-15) eine optische Eigenschaft hat, welche eine jeweilige Strahlungs-Wellenlänge auswählt, wobei die Anordnung ferner einen Filterbereich (6,8;16), welcher im wesentlichen nicht alle Wellenlängen der WDM-Strahlung beeinflusst, und welcher an jeden der Filter anstößt, und ein Mittel (7;17) zum Bewegen der Anordnung in Relation zum Ausstrahlungs-Strahl innerhalb der Ebene von der Anordnung enthält, sodass der Strahl auswählbar oberhalb eines ausgewählten Filters einfällt, wobei im Betrieb eine Bewegung zwischen Positionen, an denen der Strahl oberhalb eines Filters einfällt, stets über eine Position auftritt, an welcher der Strahl auf den Filterbereich einfällt, welcher im wesentlichen nicht alle Wellenlängen beeinflusst, **dadurch gekennzeichnet, dass** jeder Filter (2-5;12-15) eine optische Eigenschaft hat, welche eine Ausstrahlung von einer jeweiligen Wellenlänge widerspiegelt, und der Filterbereich (6,8;16), welcher im wesentlichen nicht alle Wellenlängen beeinflusst, im wesentlichen bei allen Wellenlängen der WDM-Strahlung durchlässig ist.

2. Anordnung nach Anspruch 1, bei welcher die Filter (12-15) linear angeordnet sind, und bei welcher zumindest eine, Kante von jedem Filter an eine Kante des durchlässigen Filterbereichs (16) anstößt.

3. Anordnung nach Anspruch 2, bei welcher der durchlässige Filterbereich (16) eine im wesentlichen rechteckige Form hat, und bei welcher die Filter (12-15) entlang einer längeren Kante des rechteckigen Bereiches angeordnet sind und daran anstoßen.

4. Anordnung nach Anspruch 1, bei welcher die Filter (2-5) in einer zweidimensionalen Anordnung angeordnet sind, und bei welcher zumindest eine Kante von jedem Filter an den durchlässigen Filterbereich (6,8) anstößt.

5. Anordnung nach Anspruch 4, bei welcher der durchlässige Filterbereich (6,8) eine kreuzförmige Form hat, und bei welcher sich die Filter (2-5) in angrenzenden Armen der Kreuzform befinden und daran anstoßen.

6. Anordnung nach einem der,vorhergehenden Ansprüche, bei welcher jeder Filter (2-5;12-15) eine im wesentlichen quadratische Form hat.

7. Wellenlängen-Abzweigmultiplexer (WADM), welcher eine Filteranordnung nach einem der vorhergehenden Ansprüche enthält.

8. WADM nach Anspruch 7, welcher eine Mehrzahl von Filteranordnungen enthält, welche sequentiell entlang der Ausstrahlungs-Strahlachse angeordnet sind, wodurch eine Auswahl von einer Mehrzahl von Wellenlängen aus dem Ausstrahlungs-Strahl ermöglicht wird.

## Revendications

1. Agencement de filtre sélectionnable de longueur d'onde destiné à sélectionner un rayonnement optique d'une longueur d'onde sélectionnée depuis un faisceau d'un rayonnement optique multiplexé en longueur d'onde, ledit agencement comprenant : un réseau d'éléments plan (1 ; 11) de filtres, chaque filtre (2-5 ; 12-15) ayant une caractéristique optique qui sélectionne une longueur d'onde respective de rayonnement ; le réseau comprenant en outre une région de filtre (6, 8 ; 16) qui n'affecte pas essentiellement toutes les longueurs d'onde du rayonnement à multiplexage en longueur d'onde et qui aboute chacun des filtres ; et des moyens (7 ; 17) destinés à déplacer le réseau par rapport au faisceau de rayonnement à l'intérieur du plan du réseau de telle sorte que le faisceau soit incidentel de façon sélectionnable sur un filtre sélectionné, dans lequel en opération, le mouvement entre les positions dans lesquelles le faisceau est incidentel sur un filtre, se produit toujours via une position dans laquelle le faisceau est incidentel sur la région de filtre qui n'affecte pas essentiellement toutes les longueurs d'onde, **caractérisé en ce que** chaque filtre (2-5 ; 12-15) a une caractéristique optique qui reflète le rayonnement d'une longueur d'onde respective et la région de filtre (6, 8 ; 16) qui n'affecte pas essentiellement toutes les longueurs d'onde, est essentiellement transparente pour toutes les longueurs d'onde du rayonnement à multiplexage en longueur d'onde.

2. Agencement selon la revendication 1, dans lequel les filtres (12-15) sont agencés de façon linéaire et dans lequel au moins un bord de chaque filtre vient buter avec un bord de la région de filtre transparente (16).

3. Agencement selon la revendication 2, dans lequel la région de filtre transparente (16) a une forme essentiellement rectangulaire et dans lequel les filtres (12-15) sont agencés le long et viennent buter avec un bord plus long de la région rectangulaire.

4. Agencement selon la revendication 1, dans lequel les filtres (2-5) sont agencés dans un réseau bidimensionnel et dans lequel au moins un bord de chaque filtre vient buter contre la région de filtre transparente (6, 8).

5. Agencement selon la revendication 4, dans lequel la région de filtre transparente (6, 8) a une forme cruciforme et dans lequel les filtres (2, 5) sont situés dans et viennent buter avec les bras adjacents du cruciforme.

6. Agencement selon l'une quelconque des revendications précédentes, dans lequel chaque filtre (2-5 ; 12-15) a une forme essentiellement carrée.

7. Multiplexeur d'insertion-extraction en longueur d'onde (WADM) incorporant un agencement de filtre selon l'une quelconque des revendications précédentes.

8. Multiplexeur d'insertion-extraction en longueur d'onde (WADM) selon la revendication 7 incorporant une pluralité d'agencements de filtre qui sont agencés de façon séquentielle le long de l'axe du faisceau de rayonnement, permettant ainsi la sélection d'une pluralité de longueurs d'onde depuis le faisceau de rayonnement.
